# EUROPÄISCHE PATENTSCHRIFT

(11) **EP 3 752 392 B1**
(45) Veröffentlichungstag und Bekanntmachung des Hinweises auf die Patenterteilung: **09.07.2025**
(21) Anmeldenummer: 19704751.7
(22) Anmeldetag: 05.02.2019
(51) Int. Cl.: B60R 13/08, B60N 3/04

(54) **KRAFTFAHRZEUGTEPPICHBODEN**
MOTOR VEHICLE FLOOR COVERING
MOQUETTE DE VÉHICULE À MOTEUR

(30) Priorität: 15.02.2018 DE 102018103462
(43) Veröffentlichungstag der Anmeldung: 23.12.2020
(73) Patentinhaber: Adler Pelzer Holding GmbH, 58099 Hagen (DE)
(72) Erfinder: SCHULZE, Volkmar, 84069 Schierling (DE); BECKER, Helmut, 44894 Bochum (DE); KURSCH, Volker, 45141 Essen (DE)
(74) Vertreter: Hannke Bittner & Partner mbB Regensburg
(86) Internationale Anmeldenummer: PCT/EP2019/052702
(87) Internationale Veröffentlichungsnummer: WO 2019/158389

(56) Entgegenhaltungen:
- EP-A1- 3 012 155
- EP-A2- 0 210 102
- EP-B1- 0 210 102
- WO-A1-2006/018190

## Beschreibung

Gegenstand der Erfindung ist eine Bodenverkleidungs-Isolation für ein Kraftfahrzeug aus einem oder mehreren geschäumten viskoelastischen Polyurethan-Schaumstoff(en), der sich zonenweise (partiell) über Fläche und Dicke der Isolation in seiner Formulierung sowie den physikalischen und mechanischen Eigenschaften unterscheiden kann und ein Verfahren zu dessen Herstellung.

Ziel ist dabei die Verbesserung der akustischen Wirksamkeit von Bodenverkleidungssystemen in Kraftfahrzeugen infolge der Erhöhung der Dämmungseigenschaften durch die Schaumstoff-Isolation.

Im Stand der Technik sind die folgenden Bodenverkleidungs-Isolationen bekannt:
a.)Viskoelastischer Schaumstoff, DE 39 05 607 A1, WO 2006/032433 A1
b.)Leichtschaumstoff (Schnitt-Schaum), DE 10 2008 017 893 A1 (partiell)
c.) Schaumstoff mit partiell unterschiedlicher Dichte, EP 0 210 102 B1, EP 0 169 627 A2
d.)Vlies (aufgeklebte/kaschierte Vliesstanzteile)
e.)Vorgeformte (aufgeklebte) Vliese
f.) Faser-Flock-Isolation (HMP), DE 10 2008 013 808 A1, DE 103 24 735 B3
g.)Vliese mit stehender/senkrechter Faserausrichtung, US 2017/0008462 A1, US 9 321 412 B2
h.)Faser-Flock-Isolation (HMP) mit stehender/senkrechter Faserausrichtung, DE 10 2012 003 093 A1, DE 10 2010 034 159 A1

Zur Dämpfung werden in der Materialstruktur von Bodenverkleidungen auch Schwerschichten, vollflächig und/oder partiell, als Zwischenschicht eingesetzt; des weiteren PE/PA/PE - und PE/PA - Folien mit höheren PA-Flächengewicht und sogenannte PE/PA/PE + PET - Folienvliese als Kontaktvliese zum Schaumstoff.

Bekannt ist weiterhin, dass sogenannte crash-Elemente, Fußmatten-Befestigungs-Elemente und Fußstützen-Elemente mit ein- beziehungsweise umschäumt werden.

Auch werden vornehmlich EPS-, EPP- und PEPP-Einleger in der Schaumstoff-Isolation eingeschäumt um u.a. die Trittsteifigkeit zu erhöhen.

In DE 10 2009 058 819 A1 wird eine Struktur mit Abstandshaltern hierfür beschrieben.

Des Weiteren ist bekannt, Verbundschaumstücke einzuschäumen (DE 36 23 789 A1).

In DE 20 2008 004 918 U1 wird angeführt, dass Antidröhnfolie (partiell) an mehreren Stellen kraft- oder stoffschlüssig am Teppichverbund appliziert sind.

Antidröhnbeläge sind beispielsweise in DE 10 2011 085 190 A1 beschrieben, die klassisch auf dem Karosserieboden appliziert werden. Antidröhnbeläge sind Schwerfolien, die als separate Bauteile partiell, bedarfsorientiert, auf den Karosserieboden befestigt werden. D.h., in der Montage hat man zusätzliche Arbeitsschritte sowie im Fahrzeug selbst eine Gewichtserhöhung.

Die in der DE 20 2008 004 918 U1 dargelegte Lösung, in die Bodenverkleidung partiell Schwer-/Antidröhnfolien zu integrieren, setzt ein aufwendiges Herstellungsverfahren voraus. Des Weiteren sind hierbei separate Bauteile/Folien (einzeln) herzustellen, die dann durch zusätzliche Arbeitsschritte im Werkzeug wiederum platziert werden müssen.

In DE 199 58 663 A1, welche die Basis für den Oberbegriff vom Anspruch 1 bildet, wird eine leichte Schallisolierung mit partieller Trittfestigkeit beschrieben. Angeführt ist, dass mindestens ein örtlich begrenzter Bereich ein unterschiedliches Mischungsverhältnis von Polyol und Isocyanat zu angrenzenden Bereichen aufweist, die Dichte kleiner 70 g/l ist, die angrenzenden Bereiche in etwa eine gleiche Dichte aufweisen; und der Flächenanteil des mindestens einen örtlich begrenzten Bereiches etwa 20% der Gesamtfläche nicht überschreitet. Bezüglich des Schaumsystems wird nicht über eine schalldämmende Wirkung berichtet; im Gegenteil, es wird beschrieben, dass zwischen der Dämmschicht und dem Schaumsystem noch eine Vlieslage angeordnet ist.

Die weiteren Bodenverkleidungs-Isolationen, die im Stand der Technik angeführt sind, besitzen keine speziellen -im Sinne der vorliegenden Erfindung- Dämmungseigenschaften.

In DE 20 2015 004 233 U1 wird ein Sitz beschrieben, bei dem zwei Schäume mit unterschiedliche Dichten übereinander gelagert sind. Die untere Schaumstoffschicht ist viskoelastisch. Eine bedarfsorientierte (entsprechend einer Verbrennungsmotor-Variante beziehungsweise Elektro-Antriebs-Ausführung) Mehrzonen-Ausführung der PU-Schaumstoff-Isolation, nämlich unterschiedliche PU-SchaumstoffEigenschaften über die Fläche und Dicke der Isolation liegt nicht vor. Aufgabe der Erfindung ist es, eine ansich bekannte PU-Schaumstoff-Formulierung für eine Bodenverkleidung dahingehend zu modifizieren, dass diese ein hohes Maß an schalldämmenden Eigenschaften aufweist, wobei das Schaumstoffsystem über die Fläche der Bodenverkleidungs-Isolation bedarfsorientierte Eigenschaften aufweist und damit das Flächengewicht von Antidröhnbelägen verringert werden kann, beziehungsweise diese als zusätzliches Bauteil wegfallen können.

Die vorgenannte Aufgabe wird in einer ersten Ausführungsform durch einen Kraftfahrzeugteppichboden mit den technischen Merkmalen des Anspruchs 1 gelöst.

Die Schäumwerkzeuge sind, entsprechend den bedarfsorientierten Anforderungen, in einzelne Zonen/Nester unterteilt. Die Zonen-/Nester-Trennstege dichten auf der Teppich-/Oberwarenunterseite kraftschlüssig ab.

In einer weiteren Ausführungsform der vorliegenden Erfindung wird die vorgenannte Aufgabe durch ein Verfahren mit den technischen Merkmalen des Anspruchs 7 gelöst.

Prinzipiell werden die PU-Schaumstoff-Formulierungen mittels Schäumen in das offene Werkzeug gegossen:
Das Schäum-Werkzeug ist geöffnet; der Teppich/die Oberware befindet sich im Oberwerkzeug; die Schaumsysteme werden über einen oder mehrere Mischköpfe -die sich an einem Roboterarm befinden- in die entsprechenden Formnester des Unterwerkzeuges gegossen oder geschäumt. Vorzugsweise finden hierbei sogenannte Duplex-Mischköpfe Anwendung, bei denen 2 Schaumsysteme über einen Mischkopf gleichzeitig oder auch zeitversetzt eingebracht werden können.

Die Dichte der einzelnen Schaumsysteme wird des Weiteren über das Schußgewicht variiert.

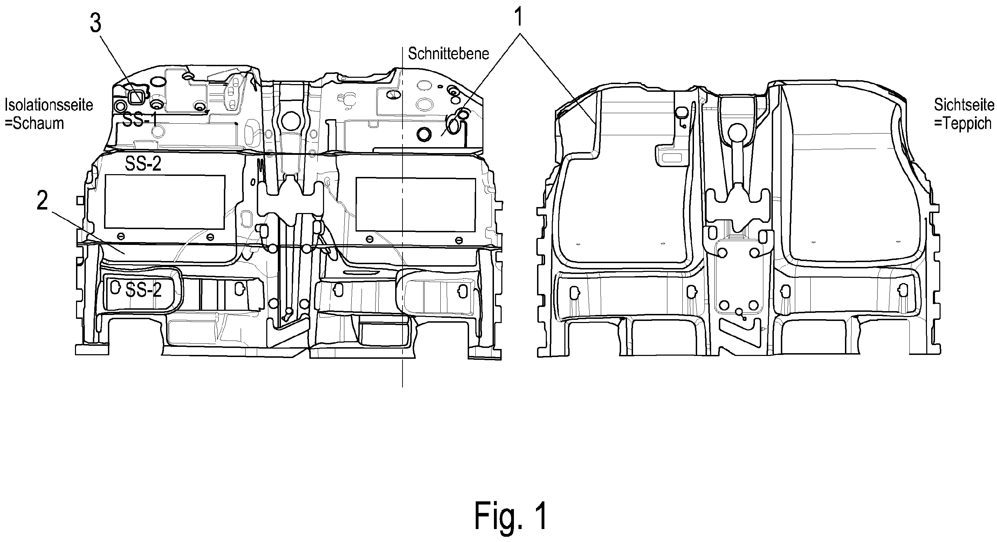

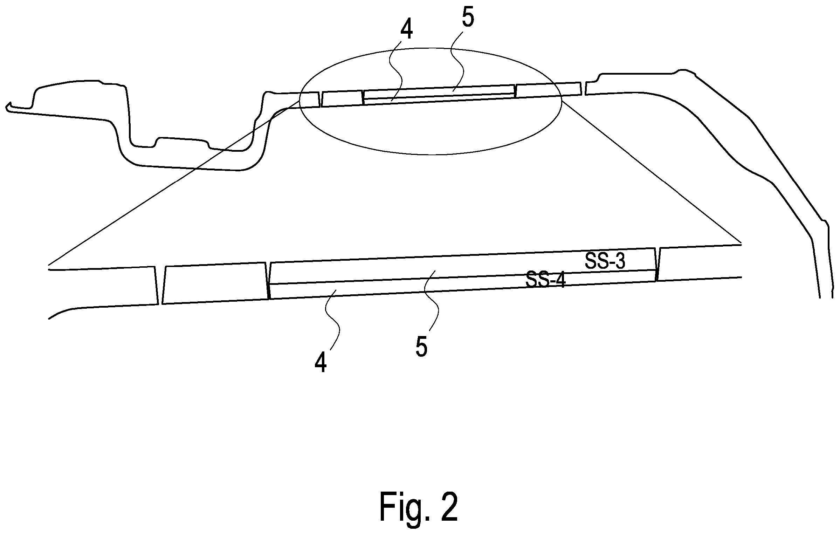

In den Fig. 1 und 2 ist eine Ausführungsform der vorliegenden Erfindung aufgezeigt:
Hier sind 4 mögliche Schaumsysteme dargestellt; wobei bei der praktischen Umsetzung das Schaumsystem SS-4 (4) vor dem Schäumen auf die Teppich-/Oberwarenunterseite aufgeklebt ist; und die Schaumsysteme SS-1 (3) bis SS-3 (5) dann mittels an Roboterarmen befindlichen Mischköpfe eingegossen/eingeschäumt werden.

Hier dargestellt [SS-3 (5) / SS-4 (4)], die über die Dicke angeordnet sind; 2 unterschiedliche Schaumsysteme und damit unterschiedliche Schaumstoffeigenschaften.

In der folgenden Tabelle 1 sind beispielhaft die physikalischen Schaumeigenschaften der verschiedenen Bereiche gemäß Fig. 1 wiedergegeben:

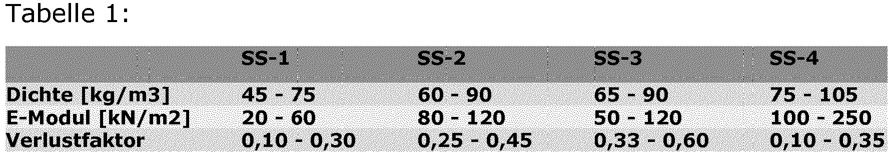

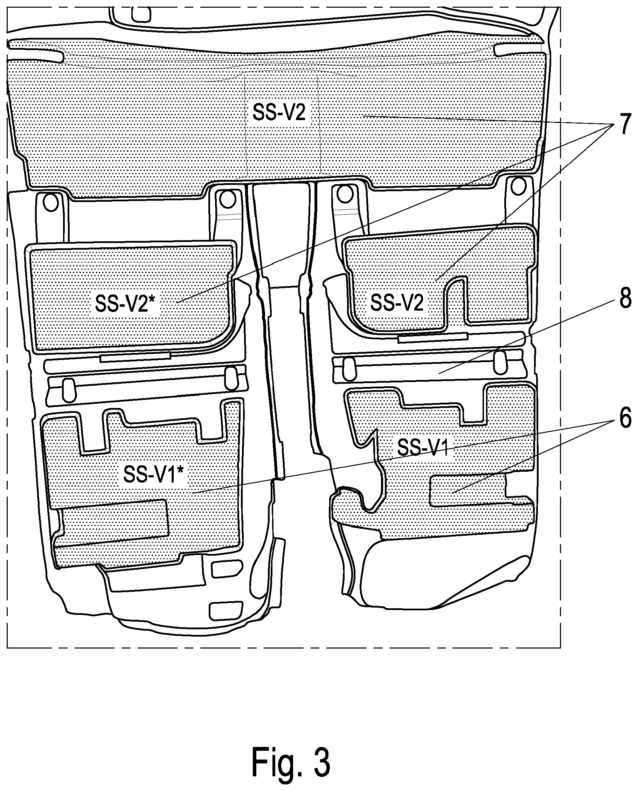

In der folgenden Tabelle 2 sind beispielhaft die physikalischen Schaumeigenschaften der verschiedenen Bereiche gemäß Fig. 3 wiedergegeben:

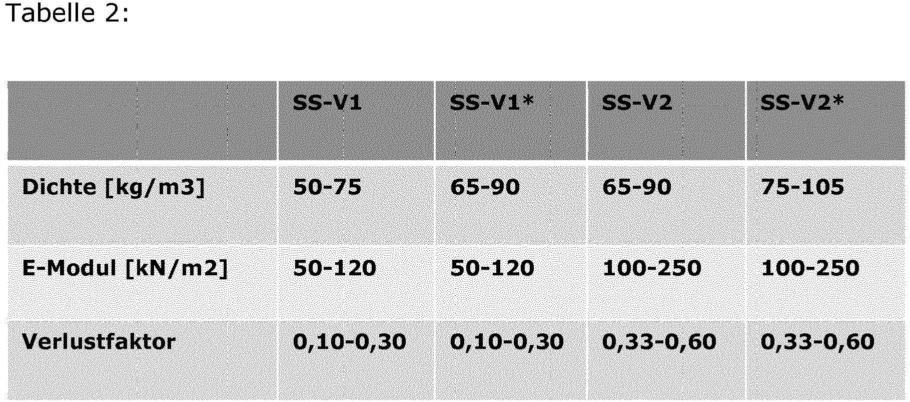

Die karosserieseitige Schaumoberfläche kann hierbei gerippt beziehungsweise konturiert sein. Das kommt zur Anwendung, wenn der Schwerpunkt auf der Isolation liegt, jedoch nicht, wenn der Schwerpunkt auf der Reduzierung der Blechschwingungen liegt.

Natürlich richtet sich die Gestaltung der blech-/karosserieseitigen Schaumoberseite/-fläche auch nach Kontur des Karosseriebodens sowie den dort befindlichen Kabeln und Luftführungen. Hiervon und von den Bodenverkleidungs-Montagebedingungen hängt dann auch die Einstellung der Adhäsion der Schaumoberfläche ab.

Kern der vorliegenden Erfindung ist also die Integration der Dämmungseigenschaften in die Schaumstoff-Isolation; das heißt in die PU-Schaumstoff-Formulierung selbst ohne zusätzliche Herstellungsverfahren beziehungsweise Arbeitsschritte.

Des Weiteren können in der bedarfsorientierten (entsprechend Verbrennungsmotor-Variante bzw. Elektro-Antriebs-Ausführung) Mehrzonen-Ausführung der PU-Schaumstoff-Isolation unterschiedliche PU-Schaumstoff-Eigenschaften über die Fläche und Dicke der Isolation eingestellt werden.

Der Vorteil ist der Wegfall eines Bauteils beziehungsweise die Verringerung des Flächengewichtes, nämlich des der Antidröhnbeläge. Weiterhin besteht der Vorteil der erfinderischen Lösung in den Kosten: erhöhte Schalldämmung in der Bodenverkleidungs-Isolation integriert-im PU-Schaumstoff selbst und dem Wegfall eines zusätzlichen Herstellungsschritts.

### Ausführungsbeispiel:

Erfindungsgemäß wurde eine Bodenverkleidung/ Kraftfahrzeugteppichboden 1 mit erhöhten Dämmungseigenschaften der Schaumstoff-Isolation 2 hergestellt (siehe Fig. 3).

Die Oberware war ein handelsüblicher Dilour-Teppich (600 g/m² PET-Faser, schwarz mit 100 g/m² Latex-Einbindung und 100 g/m² PE-Beschichtung), kaschiert mit 1000 g/m² Schwerschicht und einer PE/PA-Folie, 100µm.

Die Verformung der Oberware erfolgte in einer Standard-Thermoverformungsanlage (Ablagetisch / Kaschierung im Kontaktheizfeld / Verformung). Diese verformte Oberware wurde im Prozeß "Schäumen in das offene Werkzeug" mit 2 Schaumstoffsystemen (SS-V1 6 und SS-V2 7) hinterschäumt; die Dichten der 2 Schaumstoffsysteme wurden durch das Schussgewicht variiert (*). Als Mischkopf fand ein handelsüblicher Duplex-Mischkopf Anwendung.

Die Schaumstoffoberfläche des Schaumstoffes SS-V2 7 und SS-V2* 7 wurde adhäsiv eingestellt. Deutlich sind hier auch die schaumstofffreien Flächen 8 zwischen den unabhängigen örtlich begrenzten Bereichen der Unterseite des Teppichbodens mit jeweils verschiedener Schaumzusammensetzung gemäß Tabelle 2 erkennbar.

## Patentansprüche

1. Kraftfahrzeugteppichboden (1) mit einer Bodenverkleidungs-Isolation (2) aus einem geschäumten Polyurethan-Schaumstoff mit viskoelastischen Eigenschaften,
wobei die Bodenverkleidungs-Isolation (2) bedarfsorientiert aus einem oder mehreren unabhängigen oder untereinander verbundenen örtlich begrenzten Bereichen die Unterseite des Teppichbodens mit jeweils gleicher oder verschiedener Schaumzusammensetzung bedeckt, wobei der Schaumstoff der Bodenverkleidungs-Isolation (2) einen E-Modul im Bereich von 20 bis 250 kN/m², einen Verlustfaktor im Bereich von 0,1 bis 0,8 und eine Dichte im Bereich von 35 bis 120 g/l aufweist,
**dadurch gekennzeichnet, dass**
der Schaumstoff EPS-, EPP- und/oder PEPP-Einleger umfasst und dass die untere, im Einbauzustand mit der Karosserie in Kontakt stehende Oberfläche der Bodenverkleidungs-Isolation (2) adhäsive Eigenschaften aufweist.

2. Kraftfahrzeugteppichboden (1) nach Anspruch 1,
**dadurch gekennzeichnet, dass**
der Schaumstoff der Bodenverkleidungs-Isolation (2) einen Verlustfaktor im Bereich von 0,2 bis 0,6 und eine Dichte im Bereich von 45 bis 80 g/l aufweist.

3. Kraftfahrzeugteppichboden (1) nach Anspruch 1 oder 2,
**dadurch gekennzeichnet,**
**dass** die Bereiche der Bodenverkleidungs-Isolation (2) verschiedene Schaumzusammensetzungen mit unterschiedlicher Stauchhärte aufweisen.

4. Kraftfahrzeugteppichboden (1) nach einem der Ansprüche 1 bis 3,
**dadurch gekennzeichnet, dass**
die Dicke der Bodenverkleidungs-Isolation (2) bedarfsorientiert örtlich begrenzt karosserieseitig angepasst ist.

5. Kraftfahrzeugteppichboden (1) nach einem der Ansprüche 1 bis 4,
**dadurch gekennzeichnet, dass**
die karosserieseitige Schaumstoffoberfläche konturiert ist, insbesondere eine Rippenstruktur aufweist.

6. Kraftfahrzeugteppichboden (1) nach einem der Ansprüche 1 bis 5,
**dadurch gekennzeichnet, dass**
der Schaumstoff Abstandsgewirke umfasst.

7. Verfahren zur Herstellung eines Kraftfahrzeugteppichbodens (1) nach einem der Ansprüche 1 bis 6,
**dadurch gekennzeichnet, dass**
man
(a) in einem offenen Werkzeug, bei dem ein konturierter Teppichboden an der oberen Werkzeughälfte platziert ist, in die untere Werkzeughälfte bedarfsorientiert örtlich begrenzt ein oder mehrere Polyurethan-Komponentengemisch(e) zur Herstellung von Schaumstoff mit viskoelastischen Eigenschaften einbringt und
(b) das Werkzeug, gegebenenfalls unter Erwärmung, schließt und
(c) das oder die Komponentengemisch(e) aufschäumt und ausreagiert, wobei man die Dichte der Schaumzusammensetzung der Bodenverkleidungs-Isolation (2) durch Variation des Schussgewichts einstellt.

8. Verfahren nach Anspruch 7,
**dadurch gekennzeichnet,**
**dass** man das oder die Polyurethan-Komponentengemisch(e) örtlich begrenzt in ein oder mehrere Formnester der unteren Werkzeughälfte einbringt.

9. Verfahren nach Anspruch 7 oder 8,
**dadurch gekennzeichnet, dass**
man das oder die Polyurethan-Komponentengemisch(e) in die untere Werkzeughälfte mit einem oder mehreren Mischköpfen eingießt.

10. Verfahren nach einem der Ansprüche 7 bis 9,
**dadurch gekennzeichnet, dass**
man die Zusammensetzung des oder der Polyurethan-Komponentengemischs(e) während des Einbringens in die untere Werkzeughälfte bedarfsorientiert variiert.

## Claims

1. Motor vehicle carpet floor (1) with a floor covering insulation (2) made of a foamed polyurethane foam with viscoelastic properties,
wherein the floor covering insulation (2) covers the underside of the carpet as required from one or more independent or interconnected localized areas, each with the same or different foam composition, wherein the foam of the floor covering insulation (2) has a modulus of elasticity in the range from 20 to 250 kN/m², a loss factor in the range from 0.1 to 0.8 and a density in the range from 35 to 120 g/l,
**characterized in that**
the foam comprises EPS, EPP and/or PEPP inserts and that the lower surface of the floor lining insulation (2), which is in contact with the car body when installed, has adhesive properties.

2. Motor vehicle carpet floor (1) according to claim 1,
**characterized in that**
the foam of the floor covering insulation (2) has a loss factor in the range from 0.2 to 0.6 and a density in the range from 45 to 80 g/l.

3. Motor vehicle carpet floor (1) according to claim 1 or 2,
**characterized in that**
that the areas of the floor covering insulation (2) have different foam compositions with different compression hardness.

4. Motor vehicle carpet floor (1) according to any one of claims 1 to 3,
**characterized in that**
the thickness of the floor covering insulation (2) is adjusted localized on the body side as required.

5. Motor vehicle carpet floor (1) according to any one of claims 1 to 4,
**characterized in that**
the body-side foam surface is contoured, in particular has a ribbed structure.

6. Motor vehicle carpet floor (1) according to any one of claims 1 to 5,
**characterized in that**
the foam includes spacer fabrics.

7. A method of manufacturing a motor vehicle carpet floor (1) according to any one of claims 1 to 6,
**characterized in that**
one
(a) in an open tool, in which a contoured carpet is placed on the upper half of the tool, introduces one or more polyurethane component mixture(s) for the production of foam with viscoelastic properties into the lower half of the tool in a localized manner as required, and
(b) closes the tool, if necessary, with heating, and
(c) foams up and reacts the component mixture(s),
wherein the density of the foam composition of the floor covering insulation (2) is adjusted by varying the shot weight.

8. Method according to claim 7,
**characterized in that**
that the polyurethane component mixture(s) is/are introduced localized into one or more mold cavities of the lower tool half.

9. Method according to claim 7 or 8,
**characterized in that**
the polyurethane component mixture(s) is (are) poured into the lower tool half with one or more mixing heads.

10. The method according to any one of claims 7 to 9,
**characterized in that**
the composition of the polyurethane component mixture(s) is varied as required during insertion into the lower tool half.

## Revendications

1. Tapis de sol de véhicule à moteur (1) avec une isolation de revêtement de plancher (2) composée d'une mousse de polyuréthane expansée avec des propriétés viscoélastiques,
dans lequel l'isolation de revêtement de plancher (2) recouvre en fonction des besoins la face inférieure du tapis de sol avec une composition de mousse respectivement identique ou différente à partir d'une ou plusieurs zones délimitées localement indépendantes ou reliées entre elles, dans lequel la mousse de l'isolation de revêtement de plancher (2) présente un module d'élasticité dans la plage de 20 à 250 kN/m², un facteur de perte dans la plage de 0,1 à 0,8 et une densité dans la plage de 35 à 120 g/l,
**caractérisé en ce que**
la mousse comprend des inserts EPS, EPP et/ou PEPP, et que la surface inférieure de l'isolation de revêtement de plancher (2) en contact avec la carrosserie dans l'état monté présente des propriétés adhésives.

2. Tapis de sol de véhicule à moteur (1) selon la revendication 1,
**caractérisé en ce que**
la mousse de l'isolation de revêtement de plancher (2) présente un facteur de perte dans la plage de 0,2 à 0,6 et une densité dans la plage de 45 à 80 g/l.

3. Tapis de sol de véhicule à moteur (1) selon la revendication 1 ou 2,
**caractérisé en ce que**
les zones de l'isolation de revêtement de plancher (2) présentent des compositions de mousse différentes avec une dureté de compression différente.

4. Tapis de sol de véhicule à moteur (1) selon l'une quelconque des revendications 1 à 3,
**caractérisé en ce que**
l'épaisseur de l'isolation de revêtement de plancher (2) est adaptée en fonction des besoins côté carrosserie de manière limitée localement.

5. Tapis de sol de véhicule à moteur (1) selon l'une quelconque des revendications 1 à 4,
**caractérisé en ce que**
la surface de mousse côté carrosserie est contourée, présente en particulier une structure nervurée.

6. Tapis de sol de véhicule à moteur (1) selon l'une quelconque des revendications 1 à 5,
**caractérisé en ce que**
la mousse comprend un maillage d'écartement.

7. Procédé de fabrication d'un tapis de sol de véhicule à moteur (1) selon l'une quelconque des revendications 1 à 6,
**caractérisé en ce**
**qu'**on
(a) introduit, dans un outil ouvert, dans lequel un tapis de sol contouré est placé sur la moitié d'outil supérieure, dans la moitié d'outil inférieure, en fonction des besoins, de manière limitée localement, un ou plusieurs mélanges de composants en polyuréthane pour la fabrication de mousse avec des propriétés viscoélastiques et
(b) ferme l'outil, éventuellement sous chauffage, et
(c) fait mousser et réagir le ou les mélanges de composants, dans lequel on règle la densité de la composition en mousse de l'isolation de revêtement de sol (2) par variation du poids injectable.

8. Procédé selon la revendication 7,
**caractérisé en ce**
**qu'**on introduit le ou les mélange(s) de composants en polyuréthane de manière limitée localement dans une ou plusieurs cavité(s) de moule de la moitié d'outil inférieure.

9. Procédé selon la revendication 7 ou 8,
**caractérisé en ce**
**qu'**on verse le ou les mélanges de composants en polyuréthane dans la moitié d'outil inférieure avec une ou plusieurs têtes de mélange.

10. Procédé selon l'une quelconque des revendications 7 à 9,
**caractérisé en ce**
**qu'**on fait varier la composition du ou des mélanges de composants en polyuréthane pendant l'introduction dans la moitié d'outil inférieure en fonction des besoins.
